# EUROPEAN PATENT SPECIFICATION

(11) **EP 0 804 892 B1**
(45) Date of publication and mention of the grant of the patent: **01.12.1999**
(21) Application number: 97301906.0
(22) Date of filing: 20.03.1997
(51) Int. Cl.: A47J 31/40

(54) **Apparatus for advancing filter tape in a beverage brewer, 'window blind' design**
Vorrichtung zum Verschieben eines Filtrierbandes in einem Brühgerät von dem 'window blind' Typ
Dispositif pour avancer une bande filtrante dans une machine du type 'window blind' pour faire des boissons

(30) Priority: 29.04.1996 US 639735
(43) Date of publication of application: 05.11.1997
(73) Proprietor: King, Alan M., Westmount, Québec H3Y 2B2 (CA)
(72) Inventor: King, Alan M., Westmount, Québec H3Y 2B2 (CA)
(74) Representative: MacGregor, Gordon

(56) References cited:
- EP-A- 0 654 240
- WO-A-86/01387
- GB-A- 2 250 426
- US-A- 4 903 586

## Description

### Field of the Invention

This invention relates in general to beverage brewers and in particular to a novel apparatus for advancing coffee tape.

### Description of the Related Art

This invention is an improvement on my prior patents 4,974,751, 4,632,023, and 4,903,586 (cf. preamble of claim 1). In coffee brewers of this type described in patent 4,903,586, coffee is brewed by drawing hot water through a filter upon which the coffee is supported and after brewing the filter is moved to dispose of the coffee. Various methods are known for disposing of the used coffee.

### Summary of the Invention

According to the present invention there is provided a beverage brewing machine as claimed in claim 1.

The present invention provides novel apparatus for advancing a coffee filter tape in a coffee brewing machine, and in particular, to a mechanism driven by a brewing motor which positively removes the tape thus scraping the used coffee from the tape, and returns the tape to the start position, ready for the next cycle.

Other objects, features and advantages of the invention will be readily apparent from the following description of certain preferred embodiments thereof taken in conjunction with the accompanying drawings although variations and modifications may be effected without departing from the spirit and scope of the novel concepts of the disclosure, and in which:

### Brief Description of the Drawings

FIG. 1 is a front plan view of the coffee brewer of the invention;
FIG. 2 is a side plan view illustrating the invention;
FIG. 3 is a perspective view illustrating the tape actuating mechanism.

### Detailed Description of the Preferred Embodiments

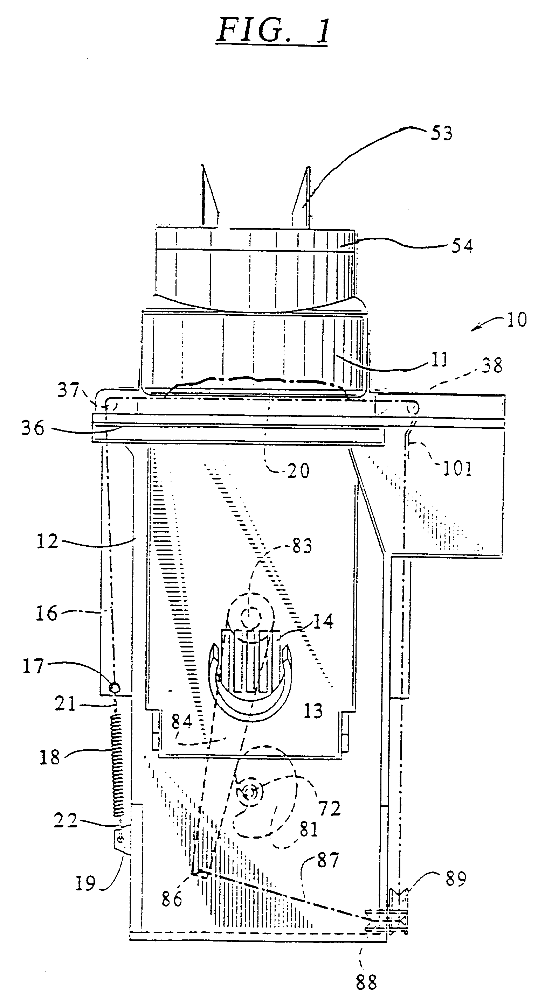

FIG. 1 is a front plan view of a coffee brewer 10 which has an upper brewing chamber 11 and a lower brewing chamber 12 which are periodically separated during the brewing cycle. A sprout 13 in the lower brewing chamber periodically supplies coffee to a cup for the user and openings 14 are formed in the lower brewing chamber to allow the coffee to emerge from the lower brewing chamber.

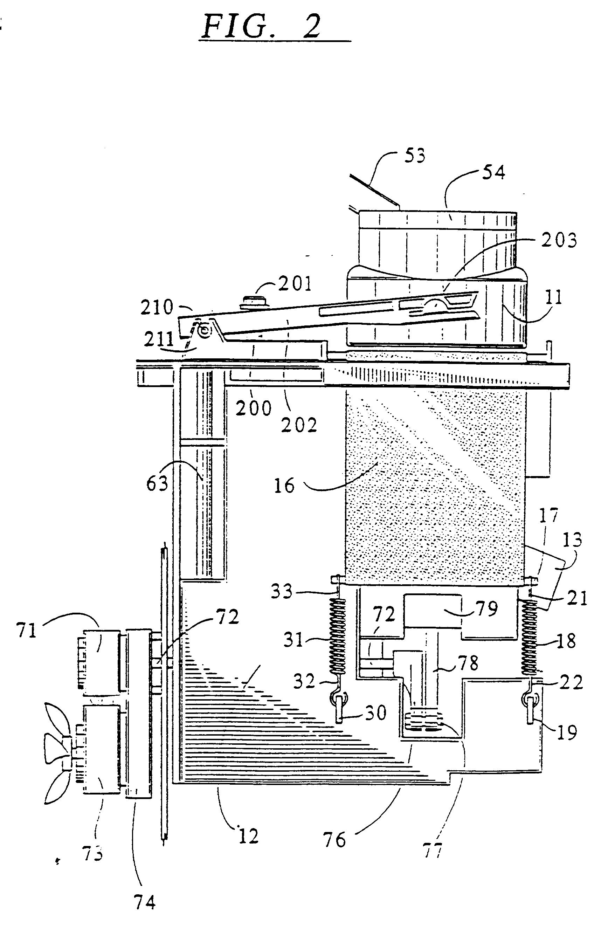

A hot water tank 51 has a spout 53 which supplies hot water into the funnel 54 of the upper brewing chamber 11. The hot water mixes with the coffee 20 which is periodically placed on the movable flexible filter tape 16 above the lower brewing chamber 11 and means including a piston 79 shown in FIG. 2 which is connected to arm 78 that has its opposite end pivoted by a pin 77 to a crank arm 76 mounted on the output shaft 72 of a motor 71 agitates and sucks the hot water through the coffee 20 and into the lower chamber 12. Hot water is periodically ejected through the chute 53 from the hot water tank 51 due to movement of shaft 63 which is coupled by a cam connection to the motor shaft 72 and which is linked through linkage 204 and 52 to the water release mechanism in the hot water tank 51. Such mechanism may be a valve or may be such as described in my co-pending application.

The upper coffee chamber 11 is periodically unclamped from the tape 16 and the lower coffee brewing chamber 12 by movement of a shaft 200 which is driven by a cam on shaft 72. Shaft 200 is connected to an arm 202 by connector 201 and moves arm 202 which is pivotally connected by pin 210 to a bracket 211 mounted to the lower brewing chamber 12. The other end of arm 202 is connected to a projection 203 on upper coffee brewing chamber 11 so as to periodically to move it up and down as described in my issued patent number 4,903,586.

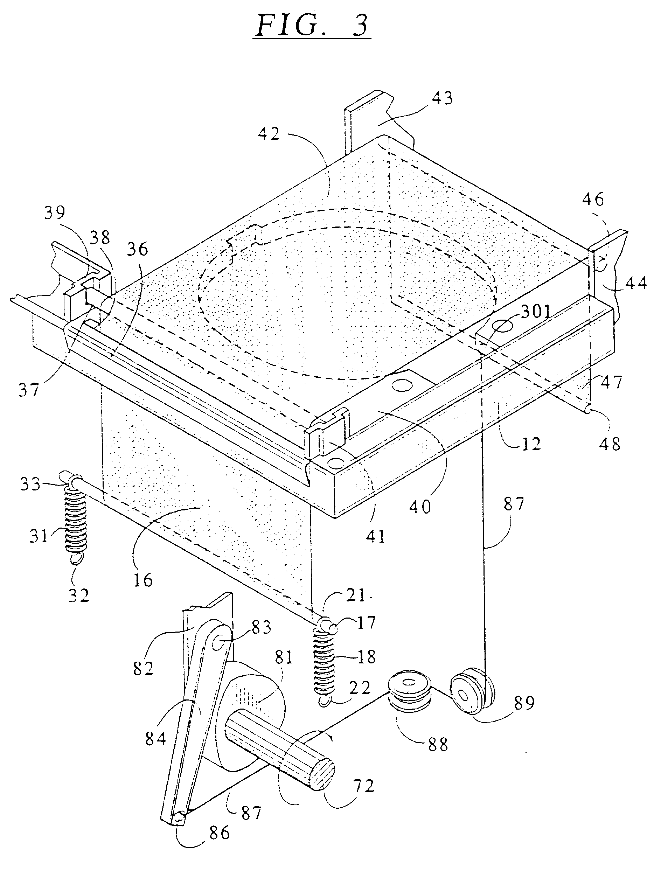

The novel apparatus for advancing the coffee tape 16 and cleaning and returning it to its initial position is illustrated in perspective in FIG. 3. A plate 40 is mounted on the upper portion of the lower brewing chamber 12 and has an opening 42 aligned with the lower brewing chamber. The porous flexible tape 16 passes over the opening 42 of plate 40 and over roller shafts 37 and 46 rotatably mounted in brackets 39 and 41 and 43 and 44 attached to the lower brewing chamber 12. One end of the tape 16 is attached to a shaft 17 which has its opposite ends engaged by springs 18 and 31 which have ends 21 and 33 that pass over the shaft 17. The opposite ends 22 and 32 of the springs 18 and 31 are connected to brackets 19 and 30 as illustrated in FIGS. 1 and 2 so as to bias the tape 16 to the position shown in FIG. 2.

The opposite end 47 of the tape 16 is connected to a shaft 48. A flexible line 87 has one end 301 connected to the mid-point of shaft 48 and passes over a first pulley 89 rotatably connected to the lower brewing chamber 12 and then over a second pulley 88 mounted by a pivot pin to the lower chamber 12. The line 87 then connects to an opening 86 in a pivot arm 84 which has its upper end connected by a pivot pin 83 to a bracket 82 on the brewing chamber. A cam 81 is mounted on the motor shaft 72 and as the motor 71 rotates, the cam 81 moves the lever arm 84 so as to pull the end 47 of the tape 16 downwardly relative to FIGS. 1, 2 and 3 so as to move the tape 16 to carry the used coffee grounds 20 outside of the brewing chamber and by a scraper 101 which removes the used coffee from the tape so that it can drop from the machine. It is to be realized that the cam 81 and lever 84 move the tape 16 and the coffee grounds 20 out of the brewing chamber during a time when the upper brewing chamber 11 is separated from the lower brewing chamber 12 by the arm 202. After the arm 84 and cam 81 has removed the portion of the tape 16 upon which the coffee grounds lie, the tape is then returned to the brewing chamber by the bias of springs 18 and 31 which pull it back into the brewing chamber as the cam 81 releases the arm 84. Subsequently, the upper brewing chamber 11 is clamped to the lower brewing chamber in preparation for the next brewing cycle during which fresh coffee and hot water will again be supplied to the brewing machine for the next brewing cycle. As shown in FIG. 3, the tape 16 moves through a slot 38 formed in the plate 40 and passes over the roller shaft 37 and 46.

It is seen that this invention provides a new and novel apparatus for advancing and returning the coffee tape in a beverage brewer and although the invention has been described with respect to preferred embodiments, it is not to be so limited.

## Claims

1. A beverage brewing machine [10] comprising in combination:
an upper brewing chamber [11] adapted to receive hot water and a beverage material and having an open lower end,
a lower chamber [12] with an open upper end normally in registration and sealed with said open lower end,
a movable flexible filter tape [16] with a portion mounted between said upper and lower chambers and said chambers normally clamping said portion therebetween,
a reciprocable piston [79] mounted in said lower chamber for forcing air through said Filter into said upper chamber and then providing negative pressure to withdraw brewed beverage through said filter into the lower chamber and is then expelled by gravity into the awaiting cup,
means for separating and sealing said upper and lower chambers so as to unclamp said filter,
where said piston is driven by a connecting rod [78] which has one end pivotally connected thereto, a crank arm [76] pivotally connected to the second end of said connecting rod, a driving shaft [72] connected to said crank arm, and a driving means connected to said driving shaft,
means for moving said filter tape when it is unclamped, Said means for moving said filter tape including filter tape pulling means (81, 89, 87) attached to one end of said tape, characterised in that the means for moving said filter tape when it is unclamped further includes spring biasing means [18, 31] connected to the other end of said tape.

2. A beverage machine according to claim 1, wherein said tape pulling means comprises a cam [81] mounted on said driving shaft [72], an arm [84] pivotally connected to said lower chamber [12] and engageable with said cam, and a flexible line [87] connected to said arm and to said second end of said tape.

3. A beverage machine according to claim 2, wherein said tape pulling means includes at least one pulley [88] over which said flexible line passes rotatably mounted to said lower chamber.

4. A beverage machine according to claim 3, wherein said tape pulling means includes a second pulley [89] over which said flexible line passes rotatably mounted on said lower chamber.

5. A beverage machine according to claim 1 including a scraper [101] engageable with said tape to remove used coffee therefrom.

## Patentansprüche

1. Brüheinrichtung (10) für Getränke mit folgenden Merkmalen:
eine obere Brühkammer (11), die zur Aufnahme heißen Wassers und eines Materials für das Getränk ausgebildet ist und deren unteres Ende offen gestaltet ist,
eine untere Brühkammer (12) mit einem offenen oberen Ende, das sich normalerweise mit dem unteren Ende der oberen Brühkammer deckt und demgegenüber abgedichtet ist,
ein bewegliches flexibles Filterband (16), das einen zwischen der oberen und der unteren Brühkammer positionierten Bereich aufweist, wobei die Brühkammern diesen Bereich zwischen sich einschließen,
ein hin- und hergehend vorgesehener Kolben (79), der in der unteren Brühkammer angeordnet ist, um Luft durch das Filter in die obere Brühkammer zu drücken und dann einen Unterdruck bereitzustellen und so ein gebrühtes Getränk durch den Filter in die untere Brühkammer abzuziehen, das dann durch Schwerkraft in einen Becher fließt,
Mittel zum Trennen und Abdichten der beiden Brühkammern und zum Freigeben des Filters,
wobei der Kolben über eine Verbindungsstange (78) angetrieben wird, die ein schwenkbar ausgebildetes Ende aufweist, ein gekröpftes Teil (76), welches drehbar mit dem zweiten Ende der Verbindungsstange verbunden ist, eine Antriebswelle (72), die mit dem gekröpften Teil in Verbindung steht, und mit einem Antrieb für die Antriebswelle,
Mittel zum Bewegen des Filterbandes, wenn es nicht eingeklemmt ist, wobei die Mittel zum Bewegen des Filterbandes Zugübertragungsmittel (81, 84, 87) aufweisen, die an einem Ende des Filterbandes angreifen, **dadurch gekennzeichnet**, daß die Mittel zum Bewegen des Filterbandes, wenn es nicht eingeklemmt ist, weiterhin federnde Elemente (18, 31) aufweisen, die an dem anderen Ende des Filterbandes angreifen.

2. Eine Brüheinrichtung nach Anspruch 1, **dadurch gekennzeichnet**, daß die Zugübertragungsmittel einen Nocken (81) auf der Antriebswelle (72), einen Schwenkarm (84), der drehbar an der unteren Brühkammer (12) gelagert ist und mit dem Nocken in Wirkverbindung steht, und eine flexible Schnur (87), die mit dem Schwenkarm und dem zweiten Ende des Filterbandes in Verbindung steht, umfassen.

3. Eine Brüheinrichtung nach Anspruch 2, **dadurch gekennzeichnet**, daß die Zugübertragungsmittel mindestens eine Rolle (88) aufweisen, über die die flexible Schnur läuft und die drehbar an der unteren Brühkammer angeordnet ist.

4. Eine Brüheinrichtung nach Anspruch 3, **dadurch gekennzeichnet**, daß die Zugübertragungsmittel eine zweite Rolle (89) aufweisen, über die die flexible Schnur läuft und die drehbar an der unteren Brühkammer angeordnet ist.

5. Eine Brüheinrichtung nach Anspruch 1**, dadurch gekennzeichnet**, daß ein Schaber (101) vorgesehen ist, der mit dem Filterband in Wirkverbindung steht, um das benutzte Kaffeepulver davon abzustreifen.

## Revendications

1. Une machine de préparation de boisson [10], comprenant, en combinaison :
une chambre de préparation supérieure [11] adaptée pour recevoir de l'eau chaude et un produit de boisson et ayant une extrémité inférieure ouverte
une chambre inférieure [12] ayant une extrémité supérieure ouverte normalement en coïncidence et isolée de façon étanche avec ladite extrémité inférieure ouverte,
une bande filtrante [16] flexible amovible dotée d'une partie montée entre lesdites chambres supérieure et inférieure et lesdites chambres normalement enserrant entre elles ladite partie,
un piston [79] susceptible d'effectuer un mouvement alternatif, monté dans ladite chambre inférieure pour forcer l'air à passer à travers ledit filtre, à pénétrer dans ladite chambre supérieure puis à fournir une pression négative afin d'extraire la boisson préparée à travers ledit filtre dans la chambre inférieure puis l'expulser par gravité dans une coupelle mise en position d'attente,
des moyens pour séparer et fermer de façon étanche lesdites chambres supérieure et inférieure de manière à desserrer ledit filtre,
dans laquelle ledit piston est entraîné par une bielle [78] ayant une extrémité reliée de façon pivotante à celui-ci, un bras de manivelle [76] relié à pivotement à la deuxième extrémité de ladite bielle, un arbre d'entraînement [72] relié audit bras de manivelle et des moyens d'entraînement reliés audit arbre d'entraînement,
des moyens pour déplacer ladite bande filtrante lorsqu'elle est desserrée, lesdits moyens formant ladite bande filtrante comprenant des moyens de traction de bande filtrante [81, 89, 67] fixés à une extrémité de ladite bande, caractérisée en ce que les moyens de déplacement de ladite bande filtrante lorsqu'elle est desserrée comprennent en outre des moyens de déplacement par ressort [18, 31] reliés à l'autre extrémité de ladite bande.

2. Une machine de préparation selon la revendication 1, dans laquelle lesdits moyens de traction de bande comprennent une came [81] monté sur ledit arbre d'entraînement [72], un bras [84] relié à pivotement à ladite chambre inférieure [12] et susceptible d'être mis en prise avec ladite came, et un cordon flexible [87] relié audit bras et à ladite deuxième extrémité de ladite bande.

3. Une machine de préparation selon la revendication 2, dans laquelle lesdits moyens de traction de bande comprennent au moins une poulie [88] sur laquelle ledit cordon flexible passe, en étant monté à rotation sur ladite chambre inférieure.

4. Une machine de préparation selon la revendication 3, dans laquelle lesdits moyens de traction de bande comprennent une deuxième poulie [89] sur laquelle passe ledit cordon flexible monté à rotation sur ladite chambre inférieur.

5. Une machine de préparation selon la revendication 1, comprenant un racleur [101] susceptible d'être mis en prise avec ladite bande afin d'en éliminer le café usagé.
